(19) Europäisches Patentamt
European Patent Office
Office européen des brevets

(11) **EP 4 495 653 A1**

(12) **EUROPEAN PATENT APPLICATION**
published in accordance with Art. 153(4) EPC

(43) Date of publication:
**22.01.2025 Bulletin 2025/04**

(21) Application number: **23770278.2**

(22) Date of filing: **20.02.2023**

(51) International Patent Classification (IPC):
***G02B 6/44*** *(2006.01)*

(52) Cooperative Patent Classification (CPC):
**G02B 6/44**

(86) International application number:
**PCT/JP2023/005994**

(87) International publication number:
**WO 2023/176319 (21.09.2023 Gazette 2023/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.03.2022 JP 2022039603**

(71) Applicant: **Fujikura Ltd.**
**Tokyo 135-8512 (JP)**

(72) Inventors:
• **TSUJIMOTO, Yusuke**
**Sakura-shi, Chiba 285-8550 (JP)**
• **OSATO, Ken**
**Sakura-shi, Chiba 285-8550 (JP)**
• **UKIYA, Noritaka**
**Sakura-shi, Chiba 285-8550 (JP)**
• **KANEKO, Soichiro**
**Sakura-shi, Chiba 285-8550 (JP)**

(74) Representative: **Plasseraud IP**
**104 Rue de Richelieu**
**CS92104**
**75080 Paris Cedex 02 (FR)**

(54) **OPTICAL FIBER CABLE AND PRODUCTION METHOD FOR OPTICAL FIBER CABLE**

(57)      The optical fiber cable (1A) includes a core (10) including an optical fiber (11), a restricting member (20) longitudinally attached to the core (10) and covering the core (10), a sheath (40) covering the restricting member (20), and a ripcord (60) located between the sheath (40) and the core (10), in which the ripcord (60) is located between a first part (21) and a second part (22) of the restricting member (20).

FIG. 1

EP 4 495 653 A1

**Description**

[Technical Field]

The present invention relates to an optical fiber cable and a production method for an optical fiber cable.
Priority is claimed on Japanese Patent Application No. 2022-039603, filed March 14, 2022, the content of which is incorporated herein by reference.

[Background Art]

Patent Document 1 discloses an optical fiber cable in which a ripcord for tearing an outer sheath is disposed in a space provided inside the outer sheath.

[Citation List]

[Patent Document]

[Patent Document 1]
Japanese Unexamined Patent Application, First Publication No. 2017-72801 [Summary of Invention]

[Technical Problem]

A structure disclosed in Patent Document 1 has a problem in that the ripcord is likely to move in a peripheral direction in the space provided inside the outer sheath. When the ripcord moves, it is difficult to perform the tearing operation of the outer sheath.
The present invention has been made in consideration of such circumstances, and an object of the present invention is to provide an optical fiber cable and a production method for an optical fiber cable capable of restraining movement of a ripcord.

[Solution to Problem]

In order to achieve the above object, according to a first aspect of the present invention, there is provided an optical fiber cable including: a core including an optical fiber; a restricting member longitudinally attached to the core and covering the core; a sheath covering the restricting member; and a ripcord located between the sheath and the core, in which the ripcord is located between a first part and a second part of the restricting member.
According to a second aspect of the present invention, there is provided a production method for an optical fiber cable, including: a first step of preparing a core including an optical fiber; a second step of winding a restricting member around the core; a third step of covering the core including the restricting member with a reinforcing member; and a fourth step of covering the reinforcing member with a sheath, in which, in the second step, the restricting member is bent, and a ripcord is disposed inside a folded-back portion of the restricting member.

[Advantageous Effects of Invention]

According to the aspects of the present invention, it is possible to provide an optical fiber cable capable of restraining movement of the ripcord.

[Brief Description of Drawings]

FIG. 1 is an example of a transverse sectional view of an optical fiber cable according to a first embodiment.
FIG. 2 is an example of a transverse sectional view of an optical fiber cable according to a second embodiment.
FIG. 3 is an example of a transverse sectional view of an optical fiber cable according to a third embodiment.
FIG. 4 is an example of a transverse sectional view of an optical fiber cable according to a fourth embodiment.
FIG. 5 is an example of a transverse sectional view of an optical fiber cable according to a modification example of the fourth embodiment.
FIG. 6 is an example of a transverse sectional view of an optical fiber cable according to a fifth embodiment.

[Description of Embodiments]

(First Embodiment)

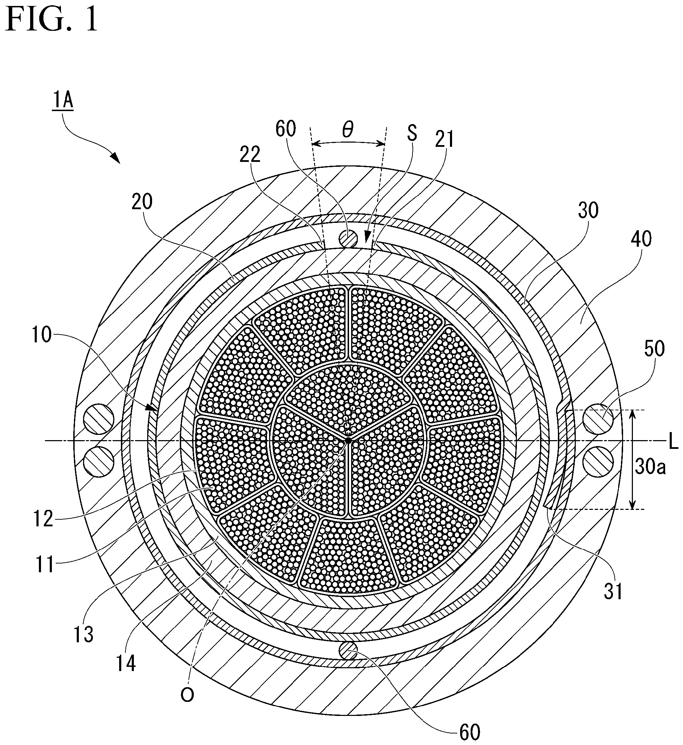

Hereinafter, a configuration of an optical fiber cable according to a first embodiment will be described with reference to FIG. 1.

As shown in FIG. 1, an optical fiber cable 1A includes a core 10 including an optical fiber 11, a restricting member 20 that covers the core 10, a reinforcing member 30, a sheath 40, four tensile strength bodies 50, and two ripcords 60.

Here, in the present embodiment, a longitudinal direction of the core 10 will be simply referred to as a longitudinal direction, and a central axis of the core 10 will be simply referred to as a central axis O. In addition, a section orthogonal to the central axis O will be referred to as a transverse section. In transverse sectional view, a direction intersecting the central axis O will be referred to as a radial direction, and a direction turning around the central axis O will be referred to as a peripheral direction.

The core 10 includes a plurality of the optical fibers 11, a plurality of bundled materials 12, a water-absorbing tape 13, and an inner sheath 14. The plurality of optical fibers 11 are bundled by each bundled material 12. In the example of FIG. 1, a total of 12 optical fiber units consisting of the optical fibers 11 and the bundled materials 12 are provided in the core 10. The water-absorbing tape 13 wraps these optical fiber units. The water-absorbing tape 13 is formed of a material having water-absorbent properties and serves to prevent water ingress or the like in the core 10. The inner sheath 14 has a cylindrical shape extending in the longitudinal direction and covers the water-absorbing tape 13. As a material of the inner sheath 14, resins such as polyethylene (PE) or polyvinyl chloride (PVC) can be used.

The number of the optical fiber units provided in the core 10 can be appropriately changed. In the example of FIG. 1, the core 10 includes three optical fiber units constituting an inner layer and nine optical fiber units constituting an outer layer. However, the sectional shape of the core 10 need not be uniform as shown in FIG. 1, and the optical fiber unit need not be divided into the inner layer and the outer layer. In addition, the bundled material 12, the water-absorbing tape 13, and the inner sheath 14 need not be provided. That is, the optical fiber 11 need not constitute the optical fiber unit. In addition, the number of the optical fibers 11 disposed in the core 10 is not limited to a plurality of optical fibers and may be one. The core 10 may be composed of only one optical fiber 11.

The reinforcing member 30 extends in the longitudinal direction and is a tubular member that surrounds the core 10 and the restricting member 20. The reinforcing member 30 may be configured with a sheet-shaped member formed in a tubular shape that surrounds the core 10 and the restricting member 20. As a material of the reinforcing member 30, for example, a metal (iron, stainless steel, copper, copper alloy, and the like) can be used. In addition, a fiber sheet formed of glass fibers, aramid fibers, or the like, fiber reinforced plastics (FRP), or the like may be used as the reinforcing member 30. The thickness of the reinforcing member 30 is, for example, about 0.1 to 0.3 mm. By setting the thickness of the reinforcing member 30 within this range, it is possible to prevent damage to the optical fiber of the core 10 due to animal bites or the like, and it is possible to facilitate an operation of cutting through the reinforcing member 30 with the ripcord 60. The reinforcing member 30 need not be disposed. The presence or absence of the disposition of the reinforcing member 30 may be selected, for example, depending on the specifications or the installation location of the optical fiber cable 1A.

The reinforcing member 30 may surround the core 10 over an entire periphery and may be overlapped in a part in the peripheral direction. An overlapped part of the reinforcing member 30 will be referred to as an overlapping portion 30a. The overlapping portion 30a has a high strength. Therefore, in the overlapping portion 30a, it is difficult to tear the reinforcing member 30 with the ripcord 60 as compared with other parts of the reinforcing member 30. In addition, in a case where the ripcord 60 comes into contact with an edge 31 of the reinforcing member 30, there is a possibility that the ripcord 60 may break. In that respect, the overlapping portion 30a and the ripcord 60 are disposed apart from each other in the peripheral direction.

For example, an adhesive layer may be provided on both surfaces of the reinforcing member 30. In this case, the reinforcing member 30 can be adhesively fixed to the sheath 40 by the adhesive layer, and end parts of the reinforcing member 30 can be adhesively fixed to each other at the overlapping portion 30a. However, the adhesive layer need not be provided on one surface or both surfaces of the reinforcing member 30.

The reinforcing member 30 wraps the core 10 over the entire periphery. For example, the overlapping portion 30a is not formed, and in transverse sectional view, the core 10 may be surrounded by the reinforcing member 30, with the edges 31 of the end parts of the reinforcing member 30 in contact with each other. In this case, the edges 31 of the reinforcing member 30 may be adhesively fixed to each other.

The sheath 40 accommodates the core 10, the restricting member 20, the ripcord 60, and the reinforcing member 30. The sheath 40 is formed in a tubular shape extending in the longitudinal direction. As a material of the sheath 40, resins such as polyethylene (PE) or polyvinyl chloride (PVC) can be used.

The tensile strength bodies 50 are used, for example, in one set of two, and two sets of the tensile strength bodies 50 (that is, a total of four) are embedded in the sheath 40 to interpose the core 10 therebetween in transverse sectional view. One set of a plurality of tensile strength bodies 50 is also called a tensile strength body group. That is, the optical fiber cable 1A includes a pair of tensile strength body groups disposed in the sheath 40 with the core 10 interposed therebetween. Each tensile strength body 50 extends in the longitudinal direction to be parallel to the core 10.

The tensile strength body 50 serves to protect the optical fiber 11 from the tension acting on the optical fiber cable 1A. The material of the tensile strength body 50 is, for example, a metal wire (steel wire or the like), a tensile strength fiber (aramid fiber or the like), FRP, or the like. The tensile strength body 50 may be a single wire or may be a wire obtained by bundling or twisting a plurality of strands together.

Due to the disposition of the tensile strength bodies 50, the optical fiber cable 1A exhibits a bending directionality. Specifically, the optical fiber cable 1A easily bends in a direction perpendicular to a neutral line L (refer to FIG. 1) and is difficult to bend in a direction parallel to the neutral line L. In a case where the four tensile strength bodies 50 are disposed as shown in FIG. 1, a midpoint of the tensile strength body group including the two adjacent tensile strength bodies 50 is defined at two locations. A straight line connecting these midpoints at the two locations is the neutral line L. The neutral line L may pass through the central axis O. The number and the disposition of the tensile strength bodies 50 can be appropriately changed. Although an example has been described in which one set of tensile strength body group includes two tensile strength bodies 50, the number of tensile strength bodies included in one set of tensile strength body group may be one, or three or more. The tensile strength body 50 may be disposed such that the bending directionality is not exhibited (that is, the neutral line L is not defined). In addition, the tensile strength body 50 may be disposed in the core 10 without being embedded in the sheath 40. Alternatively, the optical fiber cable 1A need not include the tensile strength body 50.

The ripcord 60 is used during an operation of tearing the reinforcing member 30 and the sheath 40 (hereinafter, simply referred to as a tearing operation). The ripcord 60 is required to have a mechanical strength (for example, a tensile strength) to cut through the reinforcing member 30 and the sheath 40. As the ripcord 60, a yarn obtained by twisting fibers such as polypropylene (PP) and polyester can be used. The tensile strength body 50 serves to protect the optical fiber 11 from the tension, while the ripcord 60 serves to tear the sheath 40. Therefore, the materials of the ripcord 60 and the tensile strength body 50 are different from each other. Specifically, a tensile elastic modulus of the tensile strength body 50 is larger than that of the ripcord 60. Further, the ripcord 60 is more flexible than the tensile strength body 50.

The two ripcords 60 are disposed to interpose the core 10 therebetween in transverse sectional view. With this disposition, when the two ripcords 60 are used to tear the reinforcing member 30 and the sheath 40, the reinforcing member 30 and the sheath 40 can be divided into two parts. Therefore, an operation of accessing to the core 10 from the inside of the sheath 40 is easily performed.

Further, in the example of FIG. 1, in transverse sectional view, the two ripcords 60 and the central axis O are located on one straight line, and the neutral line L and a straight line connecting the two ripcords 60 are orthogonal to each other. Consequently, the contact between the ripcord 60 and the tensile strength body 50 is restrained when the sheath 40 is torn, thereby making it easier to divide the sheath 40 into semi-tubular parts. However, in a case where the two ripcords 60 and the central axis O are not on one straight line, it is also possible to tear the sheath 40 and access to the core 10. The ripcord 60 and the tensile strength body 50 may be disposed at different positions from each other in the peripheral direction to have a positional relationship in which the ripcord 60 does not come into contact with the tensile strength body 50 when the sheath 40 is torn.

In addition, the number of the ripcords 60 need not be two and may be one, or three or more. In a case where the number of the ripcords 60 is only one, it is also possible to tear the sheath 40 and access to the core 10.

A mark for indicating the position of the ripcord 60 may be provided on the sheath 40. The mark may be, for example, a colored portion provided on the outer peripheral surface of the sheath 40, or a groove recessed from the outer peripheral surface of the sheath 40 or a protrusion protruding from the outer peripheral surface. In addition, an operator may grasp the position of the ripcord 60 based on the bending directionality of the optical fiber cable 1A. In this case, the mark indicating the position of the ripcord 60 is unnecessary.

As an example of a method of accessing to the core 10 from the optical fiber cable 1A, first, the sheath 40 and the reinforcing member 30 are partially cut open by using a tool such as a cutter. Next, a tool such as pliers is inserted into the cut-open part to pinch the ripcord 60 and pull out the ripcord 60 to the outside of the sheath 40. Through this operation, the reinforcing member 30 and the sheath 40 are torn by the ripcord 60 extending in the longitudinal direction, thereby enabling to access to of the core 10. Then, by cutting open the inner sheath 14 and the like of the core 10, it is possible to access to the optical fiber 11.

Here, an annular gap for disposing the ripcord 60 is provided on the outside of the core 10 and the inside of the sheath 40 (in the present embodiment, between the reinforcing member 30 and the core 10). In a case where the ripcord 60 moves in the peripheral direction in the gap, it may take time for the operator to find the ripcord 60, which may potentially lead to a decrease in operational efficiency. In addition, in a case where the ripcord 60 moves to approach the overlapping portion 30a of the reinforcing member 30, it may fail to tear the high-strength overlapping portion 30a, or the ripcord 60 may break upon contact with the edge 31, which may potentially lead to a decrease in operational efficiency.

In that respect, in the present embodiment, the restricting member 20 is provided to restrain the movement of the ripcord 60 in the peripheral direction. The restricting member 20 may be, for example, a sheet having water-absorbent properties (such as a wrapping tube). In this case, the restricting member 20 can also enhance waterproof performance of the optical fiber cable 1A. A material of the restricting member 20 may be the same as or different from that of the water-absorbing tape 13. Examples of the material of the restricting member 20 include a fibrous filling material, a member made of the same material as the reinforcing member 30, an adhesive, a resin sheet, and a nonwoven fabric. In a case where the restricting member 20 is an adhesive, the sheath 40 and the core 10 may be bonded to each other by the restricting member 20.

The restricting member 20 is longitudinally attached to the core 10. In addition, the restricting member 20 has a sheet shape and is wound around the core 10. The restricting member 20 has a C-like shape in transverse sectional view and does not cover the core 10 in a part in the peripheral direction. In transverse sectional view, in a case where an entire peripheral length of the restricting member 20 (that is, a width of the restricting member 20 before being wound around the core 10) is denoted by W, and the outer diameter of the core 10 is denoted by Dc, W is smaller than $\pi$Dc, which an outer peripheral dimension of the core 10. In other words, a region S is provided between both end parts of the restricting member 20 in the peripheral direction.

The restricting member 20 includes a first part 21 that is a part of the restricting member 20 and a second part 22 that is a part of the restricting member 20 different from the first part 21. The region S is provided between the first part 21 and the second part 22. In the present embodiment, both end parts of the restricting member 20 in the peripheral direction are the first part 21 and the second part 22. The ripcord 60 is disposed between the first part 21 and the second part 22. That is, the ripcord 60 is interposed between the first part 21 and the second part 22. In a case where the ripcord 60 is to move in the peripheral direction, the ripcord 60 comes into contact with the first part 21 or the second part 22, thereby restraining such movement.

In a case where the reinforcing member 30 is provided, and the end parts of the reinforcing member 30 overlap each other at the overlapping portion 30a, the first part 21 and the second part 22 are disposed apart from the overlapping portion 30a of the reinforcing member 30 in the peripheral direction. That is, in the peripheral direction, the region S and the overlapping portion 30a of the reinforcing member 30 are disposed at different positions from each other. Consequently, it is possible to prevent the edge 31 of the reinforcing member 30 and the ripcord 60 from coming into contact with each other, so that it is possible to prevent the ripcord 60 from being damaged or cut by the edge 31 of the reinforcing member 30.

The overlapping portion 30a of the reinforcing member 30 may be disposed in a range of $\pm 45°$ around the central axis O from the neutral line L, and the overlapping portion 30a of the reinforcing member 30 and the region S may be disposed at different positions in the peripheral direction. In this case, it is possible to more reliably prevent the edge 31 of the reinforcing member 30 and the ripcord 60 from coming into contact with each other.

In the present embodiment, one region S is provided, but a plurality of the regions S may be provided in consideration of the number, the disposition, and the like of the ripcords 60. In this case, the plurality of regions S may be provided by using a plurality of the restricting members 20, and the materials of the plurality of restricting members 20 may be different from each other.

The core 10 and the restricting member 20 may be adhesively fixed to each other. In this case, it is possible to restrain the ripcord 60 from entering a space between the core 10 and the restricting member 20.

Hereinafter, an example of a production method for the optical fiber cable 1A will be described. However, another production method may be employed.

First, the core 10 is prepared (first step).

Next, a sheet to be the restricting member 20 is longitudinally attached to the core 10 (second step). More specifically, the restricting member 20 is wound around the core 10 from blow in a direction of gravity. In this case, the width W (a dimension in a direction orthogonal to the longitudinal direction of the core 10) of the sheet is made shorter than the outer peripheral dimension $\pi$Dc of the core 10. As a result, an upper part of the core 10 in the direction of gravity is not covered with the restricting member 20, and the first part 21 and the second part 22 of the restricting member 20 face each other on that part.

Next, the two ripcords 60 are longitudinally attached to the core 10 and the restricting member 20. More specifically, one ripcord 60 is disposed on a part between the first part 21 and the second part 22. In addition, the remaining ripcord 60 is longitudinally attached to the restricting member 20 from below in the direction of gravity.

Next, the core 10, the restricting member 20, and the ripcord 60 are wrapped with the reinforcing member 30 (third step).

Next, the sheath 40 is formed around the reinforcing member 30 by, for example, extrusion molding (fourth step). As a result, the optical fiber cable 1A is obtained.

Here, in the production process of the optical fiber cable 1A, the ripcord 60 disposed above the core 10 in the direction of gravity may move in the peripheral direction due to the influence of the gravity. However, in the case of the present embodiment, the first part 21 or the second part 22 may come into contact with the ripcord 60, thereby restraining the movement of the ripcord 60. Therefore, the optical fiber cable 1A in which the ripcord 60 is disposed at a predetermined position can be more easily produced.

The ripcord 60 disposed below the core 10 in the direction of gravity is located at a lowest portion in a void between the restricting member 20 and the reinforcing member 30. Therefore, it is difficult for the ripcord 60 to move in the peripheral direction even in a case where the movement is not restrained by the restricting member 20, and the ripcord 60 can be easily disposed at a predetermined position. The ripcord 60 disposed below the core 10 in the direction of gravity may be disposed in the region S formed between the first part 21 and the second part 22 of the restricting member 20. In addition, two regions S may be provided, and both the ripcord 60 disposed above the core 10 and the ripcord 60 disposed below the core 10 in the direction of gravity may be each disposed between the first part 21 and the second part 22 of the restricting member 20.

As described above, the optical fiber cable 1A of the present embodiment includes the core 10 including the optical fiber 11, the restricting member 20 that is longitudinally attached to the core 10 and that covers the core 10, the sheath 40 that covers the restricting member 20, and the ripcord 60 that is located between the sheath 40 and the core 10, in which the ripcord 60 is located between the first part 21 and the second part 22 of the restricting member 20. With this configuration, it is possible to restrain the movement of the ripcord 60 in the peripheral direction.

In addition, the optical fiber cable 1A further includes the reinforcing member 30 disposed between the restricting member 20 and the sheath 40.

This makes it possible to prevent damage to the optical fiber 11 of the core 10 due to animal bites or the like.

In addition, the optical fiber cable 1A further includes the tensile strength body 50 disposed in the sheath 40, and the ripcord 60 and the tensile strength body 50 are disposed at different positions from each other in the peripheral direction in transverse sectional view.

This results in the positional relationship in which the ripcord 60 does not come into contact with the tensile strength body 50 when the sheath 40 is torn, thereby making the tearing operation easier to perform.

It is more preferable that the ripcord 60 is located between the first part 21 and the second part 22 over the entire longitudinal length of the optical fiber cable 1A. In this case, the movement of the ripcord 60 can be more reliably restricted. However, as long as the ripcord 60 is located between the first part 21 and the second part 22 in at least one transverse section, the position of the ripcord 60 is constrained at that position, so that the effect of the movement restriction can be propagated over the entire length of the ripcord 60. Therefore, it is not essential that the ripcord 60 is located between the first part 21 and the second part 22 over the entire longitudinal length.

In addition, in a case where the optical fiber cable 1A includes a plurality of ripcords 60, at least one ripcord 60 is located between the first part 21 and the second part 22 among the plurality of ripcords 60. For example, in the optical fiber cable 1A including the two ripcords 60, one ripcord 60 may be disposed between the first part 21 and the second part 22, and the other ripcord 60 may be disposed between the restricting member 20 and the reinforcing member 30 without being disposed between the first part 21 and the second part 22.

(Second Embodiment)

Next, a second embodiment according to the present invention will be described, but the basic configuration is the same as that of the first embodiment. Therefore, the same configurations are denoted by the same reference numerals, descriptions thereof will be omitted, and only different points will be described.

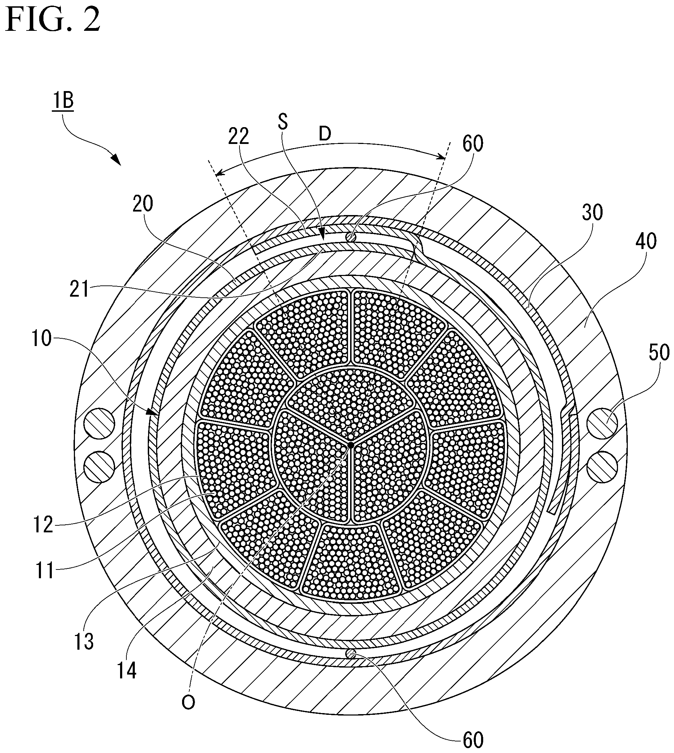

As shown in FIG. 2, an optical fiber cable 1B of the present embodiment has an aspect in which the first part 21 and the second part 22 sandwich the ripcord 60 therebetween, which is different from that of the first embodiment.

In the present embodiment, the restricting member 20 covers the entire periphery of the core 10. In addition, both end parts of the restricting member 20 in the peripheral direction are overlapped with each other. The entire peripheral length W of the restricting member 20 is larger than $\pi Dc$, which is the outer peripheral dimension of the core 10.

The ripcord 60 is sandwiched between overlapped parts of both end parts of the restricting member 20 in the peripheral direction. That is, in the present embodiment, the first part 21 and the second part 22, which are both end parts of the restricting member 20, are disposed to overlap each other in the radial direction, and the ripcord 60 is sandwiched in the radial direction between the first part 21 and the second part 22. The region S is provided between the first part 21 and the second part 22, and the ripcord 60 is disposed in the region S.

As shown in FIG. 2, a peripheral width of the overlapping part between the first part 21 and the second part 22 is denoted by an overlapping width D. The ripcord 60 is disposed in the overlapping width D in the peripheral direction.

In such a configuration, the same effect as that of the first embodiment can be obtained.

(Third Embodiment)

Next, a third embodiment according to the present invention will be described, but the basic configuration is the same as that of the first embodiment. Therefore, the same configurations are denoted by the same reference numerals, descriptions thereof will be omitted, and only different points will be described.

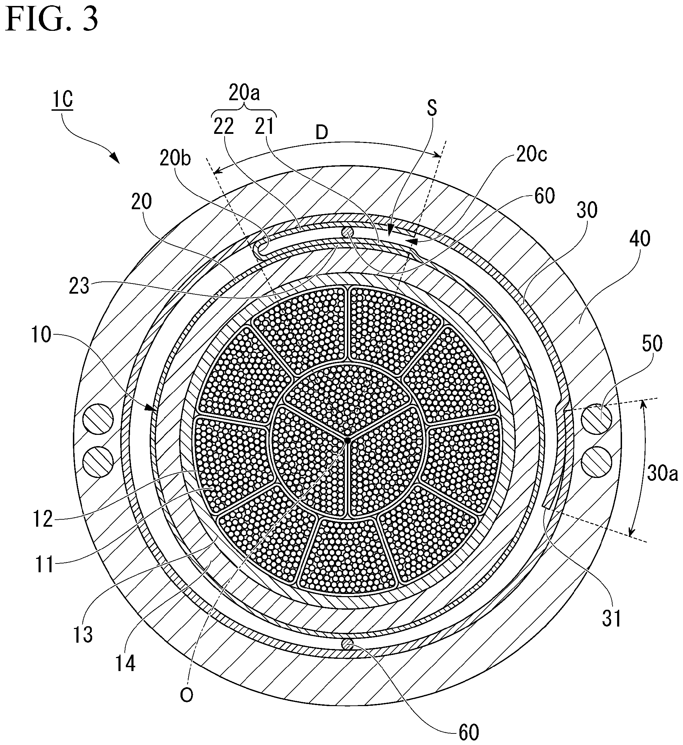

As shown in FIG. 3, an optical fiber cable 1C of the present embodiment has an aspect in which the first part 21 and the second part 22 sandwich the ripcord 60 therebetween, which is different from that of the first embodiment.

In the present embodiment, the entire peripheral length W of the restricting member 20 is larger than $\pi Dc$, which is

the outer peripheral dimension of the core 10, and a folded-back portion 20a is formed in the restricting member 20. The folded-back portion 20a is, for example, a part in which one end part of the restricting member 20 in the peripheral direction is folded back. The folded-back portion 20a includes a bent portion 20b where the restricting member 20 is bent, and an opening portion 20c in the region S where the ripcord 60 is accommodated. A folded-back portion 20a may be provided at an intermediate part of the restricting member 20 in the peripheral direction. The ripcord 60 is sandwiched between two facing surfaces of the folded-back portion 20a. These two facing surfaces are a surface of the first part 21 and a surface of the second part 22. In the present embodiment, the two facing surfaces of the folded-back portion 20a are a surface of the first part 21 directed radially outward and a surface of the second part 22 directed radially inward and disposed radially outward of the first part 21. That is, the folded-back portion 20a is configured with the first part 21 and the second part 22 that sandwich the ripcord 60 therebetween. The point that the first part 21 and the second part 22 sandwich the ripcord 60 in the radial direction is common to the second embodiment.

In such a configuration, the same effect as that of the first embodiment can be obtained.

As shown in FIG. 3, a peripheral width (that is, a width of the folded-back portion 20a) of the overlapping part between the first part 21 and the second part 22 is denoted by the overlapping width D. In the present embodiment, the ripcord 60 is disposed at a central part of the overlapping width D. The ripcord 60 need only be disposed in the folded-back portion 20a in the peripheral direction. For example, the ripcord 60 may be disposed to be in contact with the bent portion 20b or disposed in the vicinity of the opening portion 20c, in the region S.

In transverse sectional view, the restricting member 20 includes an end part of the restricting member 20 provided with the folded-back portion 20a and an end part 23 of the restricting member 20 opposite to the end part. The folded-back portion is not provided at the end part 23. The end part 23 is disposed radially inward of the folded-back portion 20a. In the peripheral direction, an edge of the end part 23 is disposed at a position equivalent to the opening portion 20c of the folded-back portion 20a, but the present invention is not limited to this example, and the edge of the end part 23 may be disposed within a range of the overlapping width D of the folded-back portion 20a in the peripheral direction.

In the optical fiber cables 1A and 1B of the first and second embodiments, it is considered that the ripcord 60 may enter the space between the restricting member 20 and the core 10 in a case where the ripcord 60 is moved in the peripheral direction. On the other hand, in the present embodiment, even in a case where the ripcord 60 moves and emerges from the folded-back portion 20a, the possibility of the ripcord 60 entering the space between the restricting member 20 and the core 10 is further reduced. Therefore, the operator can more easily find the ripcord 60. In a case where the core 10 and the restricting member 20 are adhesively fixed to each other, it is possible to further restrain the ripcord 60 from entering the space between the core 10 and the restricting member 20.

Hereinafter, an example of a production method for the optical fiber cable 1C will be described. However, another production method may be employed.

First, the core 10 is prepared.

Next, a sheet to be the restricting member 20 is longitudinally attached to the core 10. For example, the restricting member 20 is wound around the core 10 from blow in the direction of gravity. In the present embodiment, by bending one end part of the restricting member 20 at the upper part of the core 10 in the direction of gravity, the first part 21 and the second part 22 of the restricting member 20 are positioned to face each other to form the folded-back portion 20a.

When the one end part of the restricting member 20 is bent, the ripcord 60 is disposed inside the folded-back portion 20a. In a case where two ripcords 60 are provided, one ripcord 60 may be disposed between the first part 21 and the second part 22, and the remaining ripcord 60 may be longitudinally attached to the restricting member 20 from below in the direction of gravity.

Hereinafter, in the same manner as in the production method for the optical fiber cable 1A of the first embodiment, by providing the reinforcing member 30 and the sheath 40, the optical fiber cable 1C is obtained.

As described above, the production method for the optical fiber cable 1C according to the present embodiment includes a first step of preparing the core 10 including the optical fiber 11, a second step of winding the restricting member 20 around the core 10, a third step of covering the core 10 including the restricting member 20 with the reinforcing member 30, and a fourth step of covering the reinforcing member 30 with the sheath 40, in which, in the second step, the restricting member 20 is bent, and the ripcord 60 is disposed inside the folded-back portion 20a of the restricting member 20.

Here, in the production process of the optical fiber cable 1C, the ripcord 60 is fed into a production line while a predetermined tension is applied to the ripcord 60. Due to the tension applied to the ripcord 60, the ripcord 60 is fed into the production line at a stable position in the production line, so that the ripcord 60 can be reliably disposed inside the folded-back portion 20a.

(Fourth Embodiment)

Next, a fourth embodiment according to the present invention will be described, but the basic configuration is the same as that of the first embodiment. Therefore, the same configurations are denoted by the same reference numerals, descriptions thereof will be omitted, and only different points will be described.

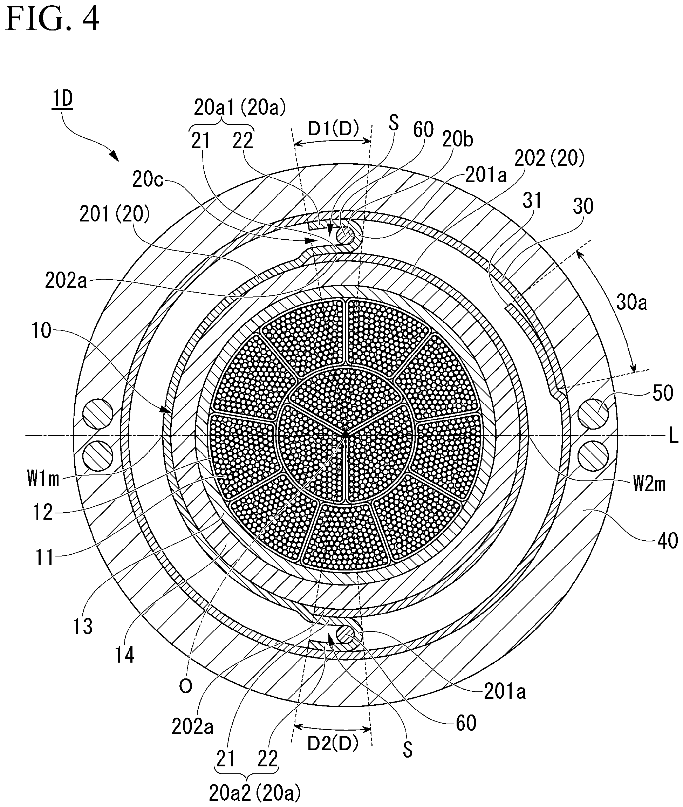

As shown in FIG. 4, an optical fiber cable 1D of the present embodiment has an aspect in which the first part 21 and the second part 22 sandwich the ripcord 60 therebetween, which is different from that of the first embodiment. In addition, in the present embodiment, the restricting member 20 includes a first restricting member 201 and a second restricting member 202. The first restricting member 201 and the second restricting member 202 are wound around the core 10, and the folded-back portion 20a is provided at any one of one end part 201a of the first restricting member 201 or one end part 202a of the second restricting member 202 that are adjacent to each other in the peripheral direction.

In the present embodiment, the folded-back portion 20a is provided at both end parts 201a of the first restricting member 201, and the first restricting member 201 and the second restricting member 202 cover the entire periphery of the core 10.

In transverse sectional view, an entire peripheral length of the first restricting member 201 (that is, a width of the first restricting member 201 before being wound around the core 10) is denoted by W1, and an entire peripheral length of the second restricting member 202 (that is, a width of the second restricting member 202 before being wound around the core 10) is denoted by W2. W1 is larger than W2, and W1 is larger than 1/2 of $\pi$Dc, which is the outer peripheral dimension of the core 10. Among the first restricting member 201 and the second restricting member 202, the second restricting member 202 is disposed closer to the overlapping portion 30a of the reinforcing member 30.

The folded-back portion 20a is formed at each of the end parts 201a of the first restricting member 201 in the peripheral direction. Since the folded-back portions 20a each have the same configuration as that of the folded-back portion 20a described in the third embodiment, the same configurations are denoted by the same reference numerals, and the description thereof will be omitted. Two folded-back portions 20a of the first restricting member 201 will be referred to as a first folded-back portion 20a1 and a second folded-back portion 20a2. The first folded-back portion 20a1 and the second folded-back portion 20a2 are disposed to interpose the core 10 therebetween in a transverse sectional view.

As shown in FIG. 4, the overlapping width D of the first folded-back portion 20a1 is denoted by D1, and the overlapping width D of the second folded-back portion 20a2 is denoted by D2. D1 and D2 may be the same as or different from each other. In a case where the outer diameter of the ripcord 60 is denoted by Dr, D1 is Dr or greater, and D2 is Dr or greater.

In the present embodiment, the ripcord 60 is disposed in the region S in the folded-back portion 20a to be in contact with the bent portion 20b. The ripcord 60 need only be disposed in the folded-back portion 20a in the peripheral direction.

As shown in FIG. 4, in the peripheral direction, a plurality of folded-back portions 20a and the overlapping portion 30a of the reinforcing member 30 are disposed at different positions from each other. For example, the overlapping portion 30a may be disposed such that a straight line connecting a central part W1m of an entire peripheral length W1 of the first restricting member 201 and a central part W2m of an entire peripheral length W2 of the second restricting member 202 intersects the overlapping portion 30a of the reinforcing member 30. In this case, it is possible to more reliably prevent both the two ripcords 60 from being damaged or cut by the edge 31 of the reinforcing member 30.

In the example shown in FIG. 4, the central part W1m and the central part W2m are located on the neutral line L, but the present invention is not limited to this example, and the central part W1m and the central part W2m need not be located on the neutral line L.

In the peripheral direction, the bent portion 20b is disposed between the opening portion 20c and the overlapping portion 30a between the end parts of the reinforcing member 30. In this way, by forming the folded-back portion 20a, it is possible to prevent the edge 31 of the reinforcing member 30 and the ripcord 60 from coming into contact with each other, for example, even in a case where the ripcord 60 moves to the outside of the folded-back portion 20a. As a result, it is possible to prevent the ripcord 60 from being damaged or cut by the edge 31 of the reinforcing member 30.

The folded-back portion 20a is not provided at the end parts 202a of the second restricting member 202. The end parts 202a are each disposed radially inward of the folded-back portion 20a. The edge of the end part 202a is disposed at a position equivalent to the opening portion 20c of the folded-back portion 20a in the peripheral direction. However, the edge of the end part 202a may be disposed within the range of the overlapping width D of the folded-back portion 20a in the peripheral direction.

In transverse sectional view, the overlapping portion 30a of the reinforcing member 30 may be disposed in a range of $\pm45°$ around the central axis O from the neutral line L, and the overlapping portion 30a of the reinforcing member 30 and the central part W1m of W1 of the first restricting member 201 may be disposed at least 45° apart from each other around the central axis in the peripheral direction. In this case, it is possible to more reliably prevent the edge 31 of the reinforcing member 30 and the ripcord 60 from coming into contact with each other.

Hereinafter, an example of a production method for the optical fiber cable 1D will be described. The production method for the optical fiber cable 1D is basically the same as the production method for the optical fiber cable 1C in the third embodiment. Therefore, only the different points will be described. However, another production method may be employed.

Two sheets to be the first restricting member 201 and the second restricting member 202 are longitudinally attached to the prepared core 10. For example, when viewed from a direction in which the core 10 travels on the production line, first, the second restricting member 202 is disposed on a side surface of the core 10 from the right side of the core 10, and then the first restricting member 201 is disposed on the side surface of the core 10 from the left side of the core 10. When the first restricting member 201 is disposed, the end parts 201a of the first restricting member 201 are positioned to overlap both the end parts 202a of the second restricting member 202. At a location where the first restricting member 201 and the second restricting member 202 overlap each other, the end parts 201a of the first restricting member 201 are bent to form the two folded-back portions 20a.

When the end part 201a of the first restricting member 201 is bent, the ripcord 60 is disposed inside the folded-back portion 20a. More specifically, the ripcord 60 is disposed on the outer peripheral surface of the end part 201a of the first restricting member 201, the first restricting member 201 is bent at a location where the ripcord 60 is disposed, and the first part 21 and the second part 22 are positioned to face each other in a state in which the ripcord 60 is in contact with the bent portion 20b. Since a predetermined tension is applied to the ripcord 60 in the production line, the folded-back portion 20a can be formed while the ripcord 60 is pressed against a location where the bent portion 20b is formed. Consequently, it is possible to restrain the variation in the position of the ripcord 60 in the longitudinal direction.

In addition, the end part 202a of the second restricting member 202 is disposed radially inward of the first restricting member 201, and the entire periphery of the core 10 is covered with the restricting member 20. Therefore, it is possible to prevent the first restricting member 201 and the second restricting member 202 from moving in the space between the core 10 and the reinforcing member 30.

As described above, in the optical fiber cable 1D of the present embodiment, the folded-back portion 20a in which the first part 21 and the second part 22 face each other includes the bent portion 20b where the restricting member 20 is bent, and the opening portion 20c in the region S where the ripcord 60 is accommodated, and the bent portion 20b is disposed between the opening portion 20c and the overlapping portion 30a between the end parts of the reinforcing member 30 in the peripheral direction.

The second restricting member 202 is disposed, so that it is possible to prevent the folded-back portion 20a from moving to a position where the folded-back portion 20a overlaps the overlapping portion 30a of the reinforcing member 30 in the peripheral direction. Therefore, it is possible to reliably prevent the ripcord 60 from coming into contact with the edge 31 of the reinforcing member 30.

In addition, the restricting member 20 includes the first restricting member 201 and the second restricting member 202, and the folded-back portion 20a, where the first part 21 and the second part 22 face each other, is formed at both end parts 201a of the first restricting member 201 in the peripheral direction.

As a result, the operational efficiency of accessing to the core 10 using the ripcords 60, which are each disposed in the folded-back portion 20a, can be improved.

(Modification Example of Fourth Embodiment)

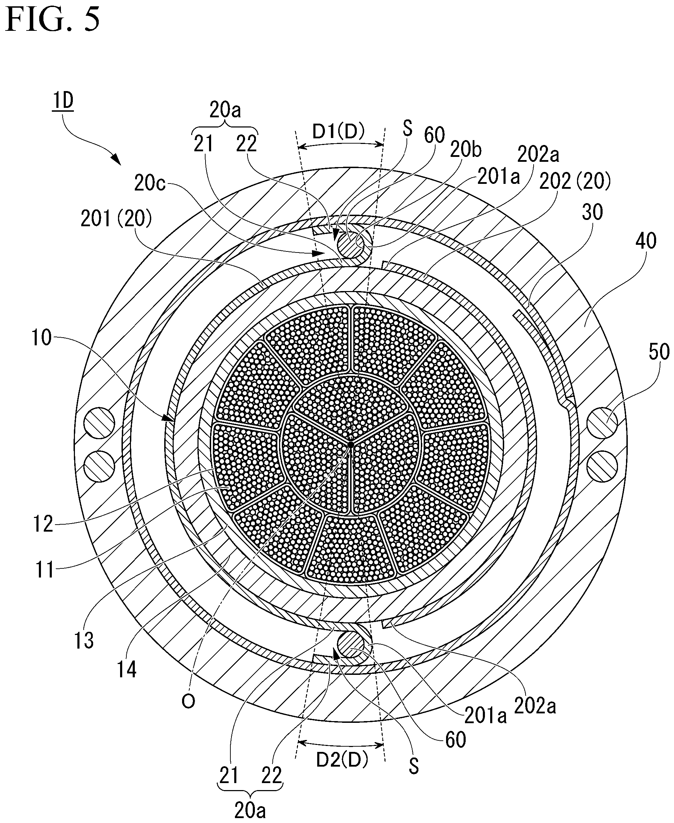

As shown in FIG. 5, in the optical fiber cable 1D, which is a modification example of the fourth embodiment, the restricting member 20 does not cover the entire periphery of the core 10. More specifically, the end part 202a of the second restricting member 202 does not overlap the folded-back portion 20a of the first restricting member 201, which is different from the fourth embodiment. As shown in FIG. 5, a gap is provided between the first restricting member 201 and the second restricting member 202.

The second restricting member 202 is disposed, so that it is possible to prevent the folded-back portion 20a from moving to the position where the folded-back portion 20a overlaps the overlapping portion 30a of the reinforcing member 30 in the peripheral direction. In addition, since there is no overlapping portion between the first restricting member 201 and the second restricting member 202, the outer diameter of the optical fiber cable 1D can be made thin.

When the optical fiber cable 1D shown in FIG. 5 is produced, among the first restricting member 201 and the second restricting member 202, the first restricting member 201 may be disposed on the outer peripheral surface of the core 10 first.

(Fifth Embodiment)

Next, a fifth embodiment according to the present invention will be described, but the basic configuration is the same as that of the fourth embodiment. Therefore, the same configurations are denoted by the same reference numerals, descriptions thereof will be omitted, and only different points will be described.

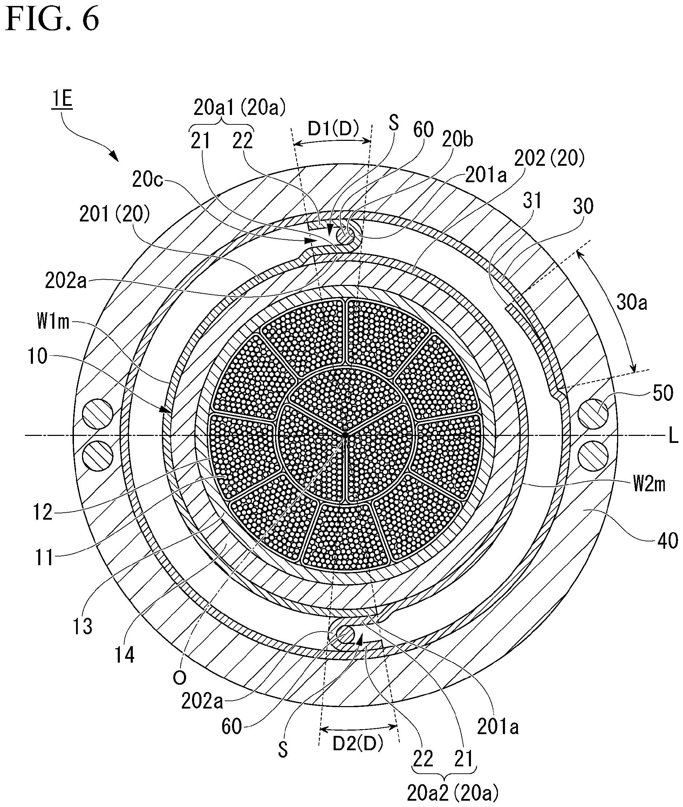

As shown in FIG. 6, in an optical fiber cable 1E of the present embodiment, the first restricting member 201 and the second restricting member 202 are each provided with one folded-back portion 20a, which is different from the fourth embodiment.

The first folded-back portion 20a1 provided on the first restricting member 201 and the second folded-back portion 20a2 provided on the second restricting member 202 are disposed to interpose the core 10 therebetween in transverse sectional view.

The end part 202a of the second restricting member 202, in which the second folded-back portion 20a2 is not formed, is disposed radially inward of the first folded-back portion 20a1 provided on the first restricting member 201. The end part 201a of the first restricting member 201, in which the first folded-back portion 20a1 is not formed, is disposed radially inward of the second folded-back portion 20a2 provided on the second restricting member 202.

In the present embodiment, the first restricting member 201 and the second restricting member 202 cover the entire periphery of the core 10, but a gap may be provided between the first restricting member 201 and the second restricting member 202 in the peripheral direction.

In transverse sectional view, the entire peripheral length W1 of the first restricting member 201 and the entire peripheral length W2 of the second restricting member 202 may be the same as or different from each other. For example, the overlapping portion 30a may be disposed such that the straight line connecting the central part W1m of the entire peripheral length W1 of the first restricting member 201 and the central part W2m of the entire peripheral length W2 of the second restricting member 202 intersects the overlapping portion 30a of the reinforcing member 30.

In the first folded-back portion 20a1, the bent portion 20b is disposed between the opening portion 20c and the overlapping portion 30a between the end parts of the reinforcing member 30 in the peripheral direction. In this way, by forming the first folded-back portion 20a1, it is possible to prevent the edge 31 of the reinforcing member 30 and the ripcord 60 from coming into contact with each other, for example, even in a case where the ripcord 60 moves to the outside of the first folded-back portion 20a1.

In the second folded-back portion 20a2, even in a case where the ripcord 60 moves and emerges from the second folded-back portion 20a2, the first restricting member 201 is disposed, so that the ripcord 60 can be prevented from entering the space between the restricting member 20 and the core 10. Therefore, the operator can more easily find the ripcord 60. A disposition may be employed in which a length between the second folded-back portion 20a2 and the overlapping portion 30a is longer than a length between the first folded-back portion 20a1 and the overlapping portion 30a in the peripheral direction such that it is difficult for the edge 31 of the reinforcing member 30 and the ripcord 60 to come into contact with each other even when the ripcord 60 moves and emerges from the second folded-back portion 20a2.

A production method for the optical fiber cable 1E is basically the same as the production method for the optical fiber cable 1D described in the fourth embodiment, but is different in that the two restricting members 201 and 202 are disposed on the side surface of the core 10 such that the end part of the restricting member 20, at which the folded-back portion 20a is formed, is located radially outward, and one end part 201a of the first restricting member 201 and one end part 202a of the second restricting member 202, which are disposed radially outward, are each bent. In the production method for the optical fiber cable 1E, the same effect as in the production method for the optical fiber cable 1D described in the fourth embodiment can be obtained. However, another production method may be employed.

As described above, in the optical fiber cable 1E of the present embodiment, the restricting member 20 includes the first restricting member 201 and the second restricting member 202, the folded-back portion 20a, where the first part 21 and the second part 22 face each other, is formed at one end part 201a of the first restricting member 201 and at one end part 202a of the second restricting member 202, and the folded-back portion 20a is provided at any one of the end part 201a of the first restricting member 201 or the end part 202a of the second restricting member 202 that are adjacent to each other in the peripheral direction.

As a result, the operational efficiency of accessing to the core 10 using the ripcords 60, which are each disposed in the folded-back portion 20a, can be improved.

Hereinafter, the above-described embodiments will be described by using examples. Note that the present invention is not limited to the following examples.

(Example 1)

Corresponding to the first embodiment, the optical fiber cable 1A including 144 intermittently-fixed optical fiber ribbons was created. Each intermittently-fixed optical fiber ribbon includes 12 optical fibers 11 and a fixing portion that intermittently connects these optical fibers 11. That is, the optical fiber cable 1A in Example 1 includes a total of 1728 optical fibers 11. As the restricting member 20, a water-absorbing tape having a width of 60 mm (that is, a peripheral length in transverse sectional view of 60 mm) was used. The diameter of the ripcord 60 was 1.0 mm.

Here, a proportion of a region of the outer peripheral surface of the core 10 (in the example of FIG. 1, the outer peripheral surface of the inner sheath 14) that is not covered with the restricting member 20 is represented by an opening ratio R1 (%). Specifically, the opening ratio R1 is obtained by the following Formula (1).

$$R1 = \theta / 360° \times 100 \ldots (1)$$

$\theta$ in Formula (1) is an angle formed by a straight line connecting the central axis O and the first part 21 and a straight line connecting the central axis O and the second part 22, as shown in FIG. 1.

In the present example, as shown in Table 1, a plurality of samples having different opening ratios R1 in a range of 5% to 50% were prepared. The "opening width" in Table 1 is a peripheral length of the region of the outer peripheral surface of the core 10 that is not covered with the restricting member 20. In addition, the "opening width/ripcord diameter" is a value obtained by dividing the opening width by the diameter of the ripcord 60.

[Table 1]

| Opening width (mm) | 30 | 27 | 24 | 21 | 18 | 15 | 12 | 9 | 6 | 3 |
|---|---|---|---|---|---|---|---|---|---|---|
| Opening ratio R1 (%) | 50 | 45 | 40 | 35 | 30 | 25 | 20 | 15 | 10 | 5 |
| Opening width/ripcord diameter | 30 | 27 | 24 | 21 | 18 | 15 | 12 | 9 | 6 | 3 |
| Operational efficiency of accessing core | NG | NG | NG | OK | OK | OK | OK | OK | OK | OK |
| Waterproof properties | NG | NG | NG | NG | OK | OK | OK | OK | OK | OK |

In Table 1, in the "operational efficiency of accessing core", the "operational efficiency of accessing core" was defined as NG for each created sample in a case where the ripcord 60 is cut while the reinforcing member 30 and the sheath 40 are torn by using the ripcord 60. The "waterproof properties" in Table 1 show a result of a waterproof test performed on each sample. Specifically, for each sample having a length of 3 m, a test was performed in accordance with "water penetration" (conditions of tap water, sample length: 3 m, water head length: 1 m, with orifice, and no pre-soaking) described in Telcordia GR-20 issue 4, July 2013, section 6.6.7, and a case where water leakage occurred over the entire length of the sample was defined as NG.

As shown in Table 1, in a case where the opening ratio R1 was 35% or less, the operational efficiency of accessing to the core could be improved. In addition, in a case where the opening ratio R1 was 30% or less, the waterproof properties could be improved.

From the above, the opening ratio R1 is preferably 35% or less and more preferably 30% or less.

A lower limit value of the opening ratio R1 is not particularly limited as long as the ripcord 60 can be disposed between the first part 21 and the second part 22. The opening width is preferably larger than the ripcord diameter.

(Example 2)

Corresponding to the third embodiment, the optical fiber cable 1C including 144 intermittently-fixed optical fiber ribbons was created. Each intermittently-fixed optical fiber ribbon includes 12 optical fibers 11 and the fixing portion that intermittently connects these optical fibers 11. That is, the optical fiber cable 1C in Example 2 includes a total of 1728 optical fibers 11. As the restricting member 20, the water-absorbing tape having a width of 60 mm (that is, a peripheral length in transverse sectional view of 60 mm) was used. The diameter of the ripcord 60 was 1.0 mm.

In the present example, as shown in Table 2, a plurality of samples having different overlapping widths D in a range of 1.0 to 10.0 mm were prepared. The "overlapping width D/ripcord diameter" is a value obtained by dividing the overlapping width D by the diameter of the ripcord 60. The "operational efficiency of accessing core" and "waterproof properties" in Table 2 are the same as in Table 1.

[Table 2]

| Overlapping width D (mm) | 1.0 | 2.0 | 3.0 | 4.0 | 5.0 | 6.0 | 7.0 | 8.0 | 9.0 | 10.0 |
|---|---|---|---|---|---|---|---|---|---|---|
| Overlapping width D/ripcord diameter | 1.0 | 2.0 | 3.0 | 4.0 | 5.0 | 6.0 | 7.0 | 8.0 | 9.0 | 10.0 |
| Operational efficiency of accessing core | NG | NG | NG | NG | OK | OK | OK | OK | OK | OK |
| Waterproof properties | OK | OK | OK | OK | OK | OK | OK | OK | OK | OK |

As shown in Table 2, in a case where the overlapping width D/ripcord diameter was 5.0 or greater, the operational efficiency of accessing to the core could be improved. From the above, the overlapping width D/ripcord diameter is preferably 5.0 or greater.

In the present example, a case where the first part 21 and the second part 22 are the folded-back portion 20a as shown in FIG. 3 was examined. However, the effect of setting the overlapping width D/ripcord diameter to 5.0 or greater is considered to be obtained in the same manner even in a case where the first part 21 and the second part 22 are both end parts of the restricting member 20 as shown in FIG. 2. The overlapping width D in FIG. 2 can also be defined in the same manner as the overlapping width D in FIG. 3.

(Example 3)

The optical fiber cable 1D including 24 intermittently-fixed optical fiber ribbons corresponding to the optical fiber cable 1D shown in FIG. 4 of the fourth embodiment was created. Each intermittently-fixed optical fiber ribbon includes 12 optical fibers 11 and the fixing portion that intermittently connects these optical fibers 11. That is, the optical fiber cable 1D in Example 3 includes a total of 288 optical fibers 11. Here, the outer diameter Dc of the core 10, the entire peripheral length W1 of the first restricting member 201, the entire peripheral length W2 of the second restricting member 202, and the outer diameter Dr of the ripcord 60 satisfy the following Expressions (2) to (4).

$$\pi Dc/2 < W1 \ ... \ (2)$$

$$W1 > W2 \ ... \ (3)$$

$$Dr \leq D1 \text{ and } Dr \leq D2 \ ... \ (4)$$

Further, in order to improve the operational efficiency of accessing to the core, it is desirable to further satisfy the following Expression (5).

$$0.6 \times \pi Dc/2 < W1 - (D1 + D2) < 1.3 \times \pi Dc/2 \ ... \ (5)$$

By comparing the magnitudes of W1 - (D1 + D2) and $\pi Dc$ using Expression (5), it can be seen to what extent the first restricting member 201 covers the entire periphery of the core 10. It is considered that, by ensuring that the proportion of the first restricting member 201 covers the core 10 within an appropriate range, it is possible to reliably prevent the ripcord 60 from coming into contact with the edge 31 of the reinforcing member 30, and it is possible to improve the operational efficiency of accessing to the core 10.

It is considered that the operational efficiency of accessing to the core 10 can be improved by satisfying the above Expression (5) even with the optical fiber cable 1D (refer to FIG. 5) which is the modification example of the fourth embodiment.

Note that the technical scope of the present invention is not limited to the above-described embodiments, and various modifications can be made without departing from the gist of the present invention.

For example, the optical fiber cables 1A to 1E need not include the reinforcing member 30. Even in a case where the reinforcing member 30 is not provided, a problem may arise in that the operator cannot find the ripcord 60 and the operational efficiency may decrease when the ripcord 60 moves in the peripheral direction. That is, the configuration of the present disclosure also exhibits the effect in an optical fiber cable that does not include the reinforcing member 30.

In addition, in the first embodiment, the peripheral thicknesses of both end parts of the restricting member 20 (that is, the thicknesses of the first part 21 and the second part 22) may be larger than the thicknesses of the other parts of the restricting member 20. In this case, the ripcord 60 is restrained from crossing over the first part 21 and the second part 22 in the peripheral direction, and the movement of the ripcord 60 can be more reliably restricted.

Further, in the third embodiment, in the example shown in FIG. 3, the bent portion 20b, the opening portion 20c, and the overlapping portion 30a are disposed in this order in the peripheral direction, but the opening portion 20c, the bent portion 20b, and the overlapping portion 30a may be disposed in this order in the peripheral direction. In this case, even in a case where the ripcord 60 disposed in the folded-back portion 20a moves to the outside from the opening portion 20c, it is possible to prevent the ripcord 60 from coming into contact with the edge 31 of the reinforcing member 30.

Moreover, the first part 21 and the second part 22 of the restricting member 20 may be partially in direct contact with each other in the region S. For example, in transverse sectional view, the size of the opening of the region S in the example shown in FIG. 2 and the size of the opening of the opening portion 20c in the examples shown in FIGS. 3 to 6 are equivalent to the outer diameter Dr of the ripcord 60, but the first part 21 and the second part 22 of the restricting member 20 may be partially in contact with each other at these openings. Alternatively, the opening may have a size smaller than the outer diameter Dr of the ripcord 60.

In these cases as well, when accessing to the core 10 in the optical fiber cable, it is possible to insert a tool such as pliers into the partially cut-open part of the sheath 40 and the reinforcing member 30, spread the folded-back portion 20a, and access to the ripcord 60.

In addition, the restricting member 20 need not cover the entire periphery of the core 10. For example, in the optical fiber cables 1A to 1E, in a case where the plurality of restricting members 20 are disposed, a gap may be provided between two restricting members 20 adjacent to each other in the peripheral direction.

In addition, within the scope not deviating from the gist of the present invention, it is possible to appropriately replace the constituent elements in the above-described embodiments with known constituent elements, and combinations of the above-described embodiments and modification examples may also be appropriately made.

[Reference Signs List]

1A to 1E: Optical fiber cable
10: Core
11: Optical fiber
20: Restricting member
20a: Folded-back portion
20b: Bent portion
20c: Opening portion
21: First part
22: Second part
201: First restricting member
202: Second restricting member
30: Reinforcing member
30a: Overlapping portion
40: Sheath
50: Tensile strength body
60: Ripcord
L: Neutral line
R1: Opening ratio
S: Region
W1m: Central part of entire peripheral length of first restricting member
W2m: Central part of entire peripheral length of second restricting member

**Claims**

1. An optical fiber cable comprising:

   a core including an optical fiber;
   a restricting member longitudinally attached to the core and covering the core;
   a sheath covering the restricting member; and
   a ripcord located between the sheath and the core,
   wherein the ripcord is located between a first part and a second part of the restricting member.

2. The optical fiber cable according to Claim 1,
   wherein the first part and the second part are both end parts of the restricting member in a peripheral direction and are disposed to interpose the ripcord therebetween in the peripheral direction.

3. The optical fiber cable according to Claim 2,
   wherein, in transverse sectional view, an opening ratio R1, which is a proportion of a region of an outer peripheral surface of the core that is not covered with the restricting member, is 35% or less.

4. The optical fiber cable according to Claim 1,
   wherein the first part and the second part are disposed to sandwich the ripcord therebetween in a radial direction.

5. The optical fiber cable according to Claim 4,

   wherein the restricting member is provided with a folded-back portion including two facing surfaces, and
   the two surfaces are a surface of the first part and a surface of the second part.

6. The optical fiber cable according to Claim 5,
   wherein the folded-back portion is formed at an end part of the restricting member in a peripheral direction.

7. The optical fiber cable according to any one of Claims 4 to 6,
wherein, in transverse sectional view, a value obtained by dividing a peripheral dimension of an overlapping part between the first part and the second part by a diameter of the ripcord is 5.0 or greater.

8. The optical fiber cable according to any one of Claims 1 to 7,
wherein the ripcord is located between the first part and the second part over an entire longitudinal length of the core.

9. The optical fiber cable according to any one of Claims 1 to 8, further comprising:
a reinforcing member disposed between the restricting member and the sheath.

10. The optical fiber cable according to any one of Claims 1 to 9, further comprising:

a tensile strength body disposed in the sheath,
wherein, in transverse sectional view, the ripcord and the tensile strength body are disposed at different positions from each other in a peripheral direction.

11. The optical fiber cable according to any one of Claims 1 to 10,
wherein the restricting member does not cover an entire periphery of the core.

12. The optical fiber cable according to any one of Claims 5 to 11, further comprising:

a reinforcing member disposed between the restricting member and the sheath,
wherein the folded-back portion, where the first part and the second part face each other, includes a bent portion where the restricting member is bent, and an opening portion in a region where the ripcord is accommodated, and the bent portion is disposed between the opening portion and an overlapping portion between end parts of the reinforcing member in a peripheral direction.

13. The optical fiber cable according to any one of Claims 5 to 12,

wherein the restricting member includes a first restricting member and a second restricting member, and the folded-back portion, where the first part and the second part face each other, is formed at both end parts of the first restricting member in a peripheral direction.

14. The optical fiber cable according to Claim 13, further comprising:

a reinforcing member disposed between the restricting member and the sheath,
wherein, in transverse sectional view, a straight line connecting a central part of an entire peripheral length of the first restricting member and a central part of an entire peripheral length of the second restricting member intersects an overlapping portion between end parts of the reinforcing member.

15. The optical fiber cable according to Claim 13 or 14, further comprising:

a reinforcing member disposed between the restricting member and the sheath; and
a pair of tensile strength body groups disposed in the sheath with the core interposed therebetween,
wherein, in transverse sectional view, an overlapping portion, where end parts of the reinforcing member overlap each other, is disposed in a range of $\pm 45°$ around a central axis of the optical fiber cable from a neutral line connecting the central axis and a peripheral midpoint of each of the tensile strength body groups, and the overlapping portion and a central part of an entire peripheral length of the first restricting member are disposed at least 45° apart from each other around the central axis.

16. The optical fiber cable according to any one of Claims 13 to 15,
wherein, in a case where an outer diameter of the core is denoted by Dc, an entire peripheral length of the first restricting member is denoted by W1, an entire peripheral length of the second restricting member is denoted by W2, and an outer diameter of the ripcord is denoted by Dr,

$$\pi Dc/2 < W1,$$

$$W1 > W2,$$

and

$$Dr \leq D1 \text{ and } Dr \leq D2$$

are satisfied.

17. The optical fiber cable according to Claim 16,
    wherein $0.6 \times \pi Dc/2 < W1 - (D1 + D2) < 1.3 \times \pi Dc/2$ is satisfied.

18. The optical fiber cable according to any one of Claims 5 to 12,

    wherein the restricting member includes a first restricting member and a second restricting member,
    the folded-back portion, where the first part and the second part face each other, is formed at one end part of the first restricting member and at one end part of the second restricting member, and
    the folded-back portion is provided at any one of an end part of the first restricting member or an end part of the second restricting member that are adjacent to each other in a peripheral direction.

19. A production method for an optical fiber cable, comprising:

    a first step of preparing a core including an optical fiber;
    a second step of winding a restricting member around the core;
    a third step of covering the core including the restricting member with a reinforcing member; and
    a fourth step of covering the reinforcing member with a sheath,
    wherein, in the second step, the restricting member is bent, and a ripcord is disposed inside a folded-back portion of the restricting member.

# FIG. 1

FIG. 2

# FIG. 3

# FIG. 4

# FIG. 5

# FIG. 6

## INTERNATIONAL SEARCH REPORT

| International application No. |
| --- |
| **PCT/JP2023/005994** |

| A. | CLASSIFICATION OF SUBJECT MATTER |
| --- | --- |

*G02B 6/44*(2006.01)i
FI:   G02B6/44 366

According to International Patent Classification (IPC) or to both national classification and IPC

| B. | FIELDS SEARCHED |
| --- | --- |

Minimum documentation searched (classification system followed by classification symbols)

G02B6/44

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2004-191504 A (FUJIKURA LTD) 08 July 2004 (2004-07-08) paragraphs [0015]-[0034], fig. 1 | 1-3, 8, 10-11 |
| Y | | 9 |
| A | | 4-7, 12-19 |
| Y | WO 2017/061196 A1 (FUJIKURA LTD) 13 April 2017 (2017-04-13) paragraphs [0018]-[0020], fig. 1-2 | 9 |
| A | | 4-7, 12-19 |
| A | JP 2013-228647 A (FURUKAWA ELECTRIC CO LTD) 07 November 2013 (2013-11-07) entire text, all drawings | 1-19 |
| A | WO 2019/124157 A1 (FUJIKURA LTD) 27 June 2019 (2019-06-27) entire text, all drawings | 1-19 |
| A | WO 2022/004666 A1 (SUMITOMO ELECTRIC INDUSTRIES, LTD.) 06 January 2022 (2022-01-06) entire text, all drawings | 1-19 |

| ✓ Further documents are listed in the continuation of Box C. | ✓ See patent family annex. |
| --- | --- |

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **24 April 2023** | **16 May 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

International application No.

**PCT/JP2023/005994**

| Category* | Citation of document, with indication, where appropriate, of the relevant passages | Relevant to claim No. |
|---|---|---|
| A | EP 3514593 A1 (STERLITE TECHNOLOGIES LIMITED) 24 July 2019 (2019-07-24) entire text, all drawings | 1-19 |

Form PCT/ISA/210 (second sheet) (January 2015)

Form PCT/ISA/210 (patent family annex) (January 2015)

**INTERNATIONAL SEARCH REPORT**
Information on patent family members

International application No.

**PCT/JP2023/005994**

| Patent document cited in search report | | | Publication date (day/month/year) | Patent family member(s) | Publication date (day/month/year) |
|---|---|---|---|---|---|
| JP | 2004-191504 | A | 08 July 2004 | (Family: none) | |
| WO | 2017/061196 | A1 | 13 April 2017 | US 2018/0106977 A1 paragraphs [0048]-[0056], fig. 1-2 CA 2982725 A1 JP 2017-72801 A | |
| JP | 2013-228647 | A | 07 November 2013 | (Family: none) | |
| WO | 2019/124157 | A1 | 27 June 2019 | US 2020/0209505 A1 entire text, all drawings EP 3730984 A1 KR 10-2020-0039790 A CN 111213079 A CA 3074700 A1 AU 2018387892 A1 JP 2019-113618 A | |
| WO | 2022/004666 | A1 | 06 January 2022 | (Family: none) | |
| EP | 3514593 | A1 | 24 July 2019 | (Family: none) | |

**EP 4 495 653 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022039603 A

- JP 2017072801 A

**Non-patent literature cited in the description**

- *Telcordia GR-20*, July 2013 (4)